Europäisches Patentamt

European Patent Office

Office européen des brevets

(11) Veröffentlichungsnummer: **0 007 084**
**B1**

(12) **EUROPÄISCHE PATENTSCHRIFT**

(45) Veröffentlichungstag der Patentschrift:
**04.11.81**

(21) Anmeldenummer: **79102327.8**

(22) Anmeldetag: **09.07.79**

(51) Int. Cl.³: **F 16 G 11/10**, B 63 B 21/08,
B 60 D 1/18, A 44 B 11/10,
A 63 B 9/00, A 45 C 13/30

(54) Seilzug-Klemmvorrichtung mit zwei an das Seil anpressbaren gezahnten Klemmkörpern, und deren Anwendung.

(30) Priorität: **11.07.78 DE 2830429**
**12.04.79 DE 2914992**

(43) Veröffentlichungstag der Anmeldung:
**23.01.80 Patentblatt 80/2**

(45) Bekanntmachung des Hinweises auf die Patenterteilung:
**04.11.81 Patentblatt 81/44**

(84) Benannte Vertragsstaaten:
**CH FR GB IT NL SE**

(56) Entgegenhaltungen:
**DE-A-2 148 386**
**US-A-3 145 684**
**US-A-3 677 214**
**US-A-3 795 218**

(73) Patentinhaber: **Voss, Gunter Meinhardt, Am**
**Ziegelstadel 10, D-8918 Diessen am Ammersee (DE)**

(72) Erfinder: **Voss, Gunter Meinhardt, Am Ziegelstadel 10,**
**D-8918 Diessen am Ammersee (DE)**

(74) Vertreter: **Zapfe, Hans, Dipl.-Ing., Seestrasse 2,**
**D-6054 Rodgau-3 (DE)**

## Seilzug-Klemmvorrichtung mit zwei an das Seil anpreßbaren gezahnten Klemmkörpern und deren Anwendung

Die Erfindung bezieht sich auf eine Seilzug-Klemmvorrichtung mit zwei gegenüberliegenden, mit Zähnen versehenen, oberhalb einer als Auflage für das Seil dienenden Bezugsfläche angeordneten Klemmkörpern, deren Abstand voneinander zur Aufnahme und Entnahme eines Seils veränderbar und durch eine auf das Seil einwirkende Zugkraft unter Anpressung der Klemmkörper an das Seil verringerbar ist.

Derartige Seilzug-Klemmvorrichtungen werden bis heute unter der Bezeichnung »Schotklemme« bei Segelbooten verwendet und dienen zum Belegen bzw. Feststellen einer Schot, wie bestimmte Seile bei Segelbooten genannt werden. Die Klemmkörper sind dabei als schwenkbare Klemmbacken ausgebildet und in der Weise beweglich angeordnet, daß der zwischen ihnen befindliche Klemmspalt durch einen Zug am Seil in einer Richtung die Tendenz hat, sich zu verengen und das Seil festzulegen, während ein Zug in der Gegenrichtung den Klemmspalt mindestens so weit vergrößert, daß das Seil im wesentlichen frei durchziehbar ist. Das Einlegen und die Entnahme des Seils sollen dabei im Hinblick auf auszuführende Segelmanöver möglichst rasch und problemlos durchführbar sein.

Eine bekannte Schotklemme ist die sogenannte »Curry-Klemme«. Es handelt sich dabei um eine Klemme, die aus zwei auf einer Tragplatte aus Metall schwenkbar befestigten Klemmbacken besteht. Diese sind mit ihren gegeneinander gerichteten gezahnten Begrenzungsflächen schräg zueinander gestellt, so daß sich zwischen ihnen ein schmaler, sich zunehmend verbreiternder V-förmiger bzw. schwalbenschwanzähnlicher Spalt befindet, in den die Schot einlegbar ist. Die Klemmbacken sind um Schwenkachsen nach außen schwenkbar, wodurch sich der zwischen ihnen befindliche Spalt zwecks Einlegen der Schot verbreitern läßt. Nach dem Einlegen der Schot werden die Klemmbacken durch Rückstellfedern wieder zurückgeschwenkt, so daß dann die gezahnten Klemmflächen die Schot zwischen sich einklemmen. Die Klemmwirkung wird durch einen Zug an der Schot in Sperrichtung der Schotklemme noch beträchtlich verstärkt (sogenannte Selbstklemmung). Mittels einer solchen Schotklemme ist es möglich, die Schot noch in Richtung der engen Öffnung (V-Spitze) des Klemmspaltes zu ziehen, d. h. zu verkürzen, während sie in Richtung der breiten Öffnung festgelegt ist.

Bei einer derartigen Klemme ist es bereits bekannt, das Einlegen der Schot in die Klemme dadurch zu erleichtern, daß man die Höhe der Klemmbacken vergrößert und die zusätzlich gewonnene Klemmfläche mit einer Reihe schräg hintereinander angeordneter Nuten versieht. Die Nuten bilden an der oberen Begrenzung der Klemmfläche eine geschwungene schiefe Ebene. Bei einem Druck auf die Schot rutscht diese auf der schiefen Ebene in das Innere des Klemmspalts hinein, ohne daß ein Zug auf die Klemmbacken ausgeübt werden muß.

Bei derartigen Klemmen ergibt sich der schwerwiegende Nachteil, daß die Belegung der Schot im Gefahrenfalle sehr umständlich zu lösen ist. Bei stürmischen Windverhältnissen ist eine Schot oft mit einer Zugkraft von mehreren 100 kg belastet, so daß für eine auf der gegenüberliegenden Seite des Bootes stehende Person eine enorme Hebelwirkung nötig ist, um die Schot anzuheben und dadurch aus der Klemme zu lösen. Wenn hierbei der feste Druck der Klemmbacken auf die Schot hinzukommt, so kann ein oft über das Kentern eines Bootes entscheidender Zeitverlust entstehen. Zudem wird die Schot auf die Dauer durch Herausreißen aus der gezahnten Klemme beschädigt, so daß sie meist spätestens nach einer Saison ausgewechselt werden muß.

Durch die US-A-3 677 214 ist eine weitere Schotklemme bekannt, die nur eine schwenkbare Klemmbacke aufweist, durch die die Schot in Sperrichtung gegen eine ebene Fläche gepreßt wird, die das Widerlager der Klemmbacke darstellt. Zur Erleichterung einer Entnahme der Schot ist das Ende der Klemmbacke um einen begrenzten Betrag kippbar angeordnet. Ein Belegen der Schot wird dadurch jedoch nicht erleichtert. Die einseitige Klemmung der Schot führt in Verbindung mit der leichten Gleitmöglichkeit der Schot auf der der Klemmbacke gegenüberliegenden Fläche zu einer sehr starken Beanspruchung der Schot, die einen frühzeitigen Verschleiß zur Folge hat.

Durch die DE-A-2 148 386 ist eine Seilklemme mit zwei Klemmkörpern bekannt, deren Zähne parallel zueinander und senkrecht zu einer Bezugsfläche verlaufen, die durch die Oberfläche eines Gehäusebodens gebildet wird. Der Abstand der Klemmkörper ist durch deren Parallelverschiebung innerhalb des Gehäuses veränderbar. Auch aus einer derartigen Seilklemme kann das Seil im Gefahrenfalle nur sehr umständlich und unter großem Kraftaufwand wieder gelöst werden. Dabei tritt eine beträchtliche Reibung zwischen dem Seil und der Verzahnung der Klemmkörper auf, so daß das Seil in kürzeren Abständen ausgewechselt werden muß. Die Parallelführung im Gehäuse hat den weiteren Nachteil, daß durch eingedrungene Fremdkörper wie Sand, Salzverkrustungen etc. sowie durch Korrosion leicht eine Schwergängigkeit entstehen kann, welche die Funktion der Klemme in Frage stellt.

Durch die US-A-3 145 684 ist eine Seilklemme mit einem einzigen rotierenden Klemmkörper bekannt, dessen Abstand von einer zweiten Klemmfläche, die Teil eines sogenannten Horns ist, nicht veränderbar ist. Sowohl zum Festklemmen des Seils als auch zu dessen Lösen ist eine erhebliche Längsverschiebung des Seils erforderlich, die mindestens einer Umschlingung des Klemmkörpers entspricht. Die Bedienungsperson muß also abschätzen, wie weit das Seil noch durch die Klemme läuft, bis es eindeutig festgeklemmt ist. Dieser Weg ist nicht zuletzt abhängig vom Seildurchmesser und von seiner Verformbarkeit. Beim Lösen des Seils muß die Bedienungsperson den Klemmvorgang rückwärts ablaufen lassen, d. h., das Seil entgegen einer gegebenenfalls beträchtlichen Zugkraft um die gleiche Länge zurückziehen, bis es aus der Klemme entnehmbar ist. Dieser Vorgang erfordert nicht nur Kraft, sondern auch Zeit, so daß das Boot in der Zwischenzeit kentern kann. Ferner kann die Seilklemme nicht bis zum Anschlag bzw. Ende des Seils belegt werden. Die erforderliche Mindestumschlingung verhindert das sogenannte »Dichtnehmen«, welches beim Segeln üblich ist. Schließlich führt aber auch bei dieser Klemme die erhebliche Reibung des Seils an den Zähnen bzw. Nuten sowie an dem Horn zu einem starken Seilverschleiß, der ein häufiges Auswechseln des Seils zur Folge hat.

Durch die US-A-3 795 218 ist eine Seilklemme mit symmetrisch schwenkbaren und unter Federdruck stehenden Klemmbacken bekannt, deren Zähne senkrecht zu einer Befestigungsplatte verlaufen. Um das Einlegen des Seils zu erleichtern, sind die Klemmbacken mit aus Kunststoff bestehenden Aufsätzen versehen, die eine in der Projektion kongruente Zahnung aufweisen, deren Zahnspitzen jedoch bogenförmig auseinanderlaufen. Auf diese Weise bilden die Hüllkurven der Kunststoff-Zahnspitzen auch nach oben hin einen in etwa V-förmigen Spalt, der das Einlegen des Seils unter Spreizung der Klemmbacken erleichtert. Auf diese Weise wird jedoch die Reibung zwischen dem Seil und dem unteren Teil der Klemmbacken nicht wesentlich vermindert bzw. völlig aufgehoben, so daß auch mit dieser Seilklemme ein merklicher Seilverschleiß einhergeht und der Kraftbedarf beim Lösen der Klemme im wesentlichen der gleiche ist wie bei den bisher beschriebenen Klemmen auch.

Der Erfindung liegt die Aufgabe zugrunde, eine Seilzug-Klemmvorrichtung der eingangs beschriebenen Art zu schaffen, die aus möglichst wenigen beweglichen Teilen besteht, aus der dennoch das Seil rasch und problemlos befreit werden kann und in der es auch bei starkem, abruptem Zug keinen Beschädigungen ausgesetzt ist.

Die Lösung der gestellten Aufgabe erfolgt bei der eingangs beschriebenen Seilzug-Klemmvorrichtung erfindungsgemäß dadurch, daß die Klemmkörper als Rollen ausgebildet und auf je einer Achse frei drehbar gelagert sind.

Das Prinzip der Erfindung besteht somit im wesentlichen darin, daß die nicht umlaufende Zahnung der Klemmkörper durch eine mit dem Seil umlaufende Zahnung in Rollenform ersetzt wird.

Die Vorteile der Erfindung gegenüber bekannten Klemmen liegen insbesondere darin, daß die Befreiung des Seils sehr leicht möglich wird, da dessen Herausziehen lediglich die Umkehrung der Vorgänge wie beim Einlegen bedingt. Während das Seil beim Einlegen zunächst auf die beiden gewölbten Oberseiten der Rollen drückt und dadurch eine Verbreiterung des Klemmspaltes bewirkt, wobei der zwischen beiden Rollen gebildete Widerstand zu überwinden ist, zieht sich das Seil umgekehrt beim Anheben durch den auf der Unterseite der Rollen gebildeten Spalt und hat nur den Engpaß der sich dabei synchron drehenden und auseinander bewegenden Rollen zu überwinden. Auf diese Weise ist auch bei Nässe ein schnelles Lösen des Seils möglich. Dennoch wird das Seil bei Zugbelastung in Sperrichtung zuverlässig festgehalten, da das Seil im Ruhezustand, durch die Bezugsfläche festgelegt, unterhalb einer Ebene liegt, die durch zwei gegenüberliegende Rollenachsen geht. Ein frühzeitiger Verschleiß des Seils durch Reibung an den Kanten der Zähne ist infolgedessen weitgehend ausgeschlossen.

Eine besonders vorteilhafte Seilzug-Klemmvorrichtung ist gemäß der weiteren Erfindung dadurch gekennzeichnet, daß die Achsen einen spitzen Winkel zwischen sich einschließen und daß die Rollen unter Veränderung ihres Abstandes voneinander auf den Achsen längsverschiebbar angeordnet sind. Auf diese Weise wird, abhängig von der Form der Rollen, ein etwa V-förmiger Klemmspalt gebildet, der durch die Verschiebung der Rollen je nach der Bewegungsrichtung erweitert oder verengt werden kann. Ein Zug auf das Seil in Richtung der Spitze des »V« führt zu einem weiteren Zusammenpressen der Rollen und zu einer stärkeren Anpressung des Seils an die Bezugsfläche unterhalb der Rollen. Es versteht sich, daß die Lage der Achsen untereinander und zur Bezugsfläche, die Form der Rollen und deren Bewegungsmöglichkeit vom Seildurchmesser abhängig sind. Die Achsen verlaufen dabei im wesentlichen parallel zur Bezugsfläche, wobei es sich auch versteht, daß die Ebene, in der die Achsen liegen, nicht parallel zur Bezugsfläche verlaufen muß, sondern z. B. auch leicht schräg zu dieser verlaufen kann, womit gegebenenfalls die Klemmcharakteristik veränderbar ist.

Durch die feste Anordnung der Achsen wird der Idealwinkel von ca. 30 Grad dauernd beibehalten. Dabei ist die erfindungsgemäße Klemme nicht unbedingt auf Rückstellfedern angewiesen, sie bleibt vielmehr, wenn auch vermindert, funktionsfähig, wenn die Federn entfallen oder entzwei gehen.

Wichtig ist aber auch die Gewichtsersparnis. Da sich auf einem Boot meist 20 oder mehr Klemmen befinden, ist dieses für Rennboote bereits ein wichtiger Gesichtspunkt.

Ein weiterer sehr wesentlicher Vorteil der vorliegenden Klemme ist aber, daß sie beidseitig, d. h. auch und gerade von der rückwärtigen Seite, d. h. der »V-Spitze« her, zu öffnen ist. Dies ist insbesondere dann wichtig, wenn das Seil z. B. auf Booten über eine Rolle um 180 Grad umgelenkt und mit einem sogenannten »Traveller«, einem auf Schienen laufenden, zu Trimmzwecken verwendeten Wagen, verbunden ist. Dies ist bei allen bisher bekanntgewordenen Klemmen nicht möglich.

Besonders zweckmäßig werden dabei die Achsen beidseitig fest in Achslagern gehalten, die auf einer Tragplatte angeordnet sind. Die den Rollen zugekehrte Oberfläche der Tragplatte enthält dabei die Bezugsfläche. Für den praktischen Gebrauch hat es sich als besonders zweckmäßig erwiesen, die Achsen unter einem Winkel von etwa 25 bis 35 Grad, vorzugsweise von etwa 30 Grad, zueinander auszurichten. Auf diese Weise wird ein optimales Verhältnis von Zugkraft und Klemmkraft erreicht. Um die freie Verschiebbarkeit in Achsrichtung herbeizuführen, ist es notwendig, daß die Rollen etwas kürzer sind als die Achsen selbst. Dabei kann es erwünscht sein, daß sich die Zähne der Rollen an der Stelle, wo sie einander am nächsten kommen, berühren.

Damit sich die Rollen jeweils in einer definierten Lage befinden, ist es weiterhin von Vorteil, daß zwischen Achse und Rolle eine Rückstellfeder liegt, welche die Achse umgibt und die Rollen in Richtung auf eine Annäherung belastet. Die Rückstellfeder kann dabei durch eine zusätzliche Hülse geschützt sein. Zweckmäßig handelt es sich dabei um eine sehr weiche, rostfreie Schraubenfeder, die sich mit einem Ende an der Rolle, mit dem anderen Ende an einem der Achse zugeordneten Widerlager abstützt. Die Rückstellfeder hat die Aufgabe, nach dem Einlegen des Seils in die Klemmvorrichtung, bei dem die Rollen längs der Achsen in Richtung auf das offene Ende des V-förmigen Klemmspaltes verschoben werden, diese Verschiebung soweit wie möglich wieder rückgängig zu machen und so die gezahnten Rollen an das Seil zu pressen.

Es ist auch möglich, mehrere Rollenpaare etagenartig übereinander anzuordnen, deren Achsen von unten nach oben in gleichem Abstand und parallel zueinander angeordnet sind. Mehrere Rollenpaare haben den Vorteil, daß sich zwischen ihnen mehrere, ebenfalls etagenartig übereinanderliegende Klemmspalte bilden. Ist eine besonders intensive Festlegung des Seils erforderlich, so kann dieses ohne weiteres durch einen etwas verstärkten Druck in den nächsttieferen Klemmspalt gedrückt werden.

Die Rollen können alle für den erfinderischen Zweck geeigneten Formen annehmen, z. B. Zylinder- oder Walzenform, Ellipsoidform, Spindelform, Tonnenform, Kugelform, Kegelstumpfform oder Birnenform. Besonders geeignet ist eine birnenförmige Gestaltung der Rollen, wobei nur die verdickten, einen Klemmspalt für das Seil bildenden Teile der Rollen eine Zahnung aufweisen. Die dickeren Teile weisen hierbei in Richtung der Spitze des »V«.

Die Zahnung der Rollen kann gleichfalls sehr unterschiedlich ausgeführt sein. Auch eine unregelmäßige Zahnung in Form einer Riffelung oder Rändelung der Rollenoberfläche ist möglich. Insbesondere kann die Oberfläche der Rollen aus Kegelstümpfen zusammengesetzt sein, die sich zu einem Sägzahnprofil ergänzen, wobei die im wesentlichen senkrecht zur Rollenachse stehenden Flanken des Sägezahnprofils der Zugrichtung auf das Seil abgewandt sind. Eine derartige Rollenform kann in der Weise abgewandelt werden, daß die Oberfläche der Rollen nach Art eines Sägezahngewindes ausgeführt ist, wobei die im wesentlichen senkrecht zur Rollenachse stehenden Flanken des Sägezahnprofils der Zugrichtung auf das Seil abgewandt sind. Ein gegenseitiges Ineinandergreifen der Zähne ist nicht erforderlich; es kann im Gegenteil das Einlegen des Seils sogar erleichtern, wenn die gegenüberliegenden Zähne einen geringeren Abstand voneinander haben, der auch unter 1 mm liegen kann. Zweckmäßig ist es, die Zahnung zum spitzen Ende des »V« hin zu verschärfen, d. h., die Zähne stärker vorspringen zu lassen.

Zum Zwecke einer noch weitergehenden Schonung des Seils ist es besonders vorteilhaft, wenn mindestens einer der Zähne gut abgerundet ist und geringfügig über die Kanten der übrigen Zähne vorsteht. Wird hierbei in das Seil in Öffnungsrichtung der Klemmvorrichtung gezogen, so gleitet es vorwiegend auf dem abgerundeten Zahn bzw. den abgerundeten Zähnen. Umgekehrt behindern diese jedoch nicht einen Eingriff der scharfen Zähne in das Seil, wenn dieses in Schließrichtung der Klemmvorrichtung belastet wird.

Die Seilzug-Klemmvorrichtung kann in sehr einfacher Weise für unterschiedliche Seildurchmesser einstellbar gestaltet werden. Dies geschieht gemäß der weiteren Erfindung dadurch, daß die Tragplatte zwischen gegenüberliegenden Rollen mit einer verstellbaren Bezugsfläche für das Seil versehen ist. Ganz besonders zweckmäßig ist dabei die Bezugsfläche Teil eines Schiebekörpers, der über eine schiefe Ebene mit einer entsprechenden schiefen Ebene der Tragplatte sowie mit einer in Gefällerichtung der schiefen Ebene wirkenden Verstelleinrichtung in Verbindung steht.

Auf diese Weise ist es möglich, die Klemme an verschieden dicke Seilstärken anzupassen, d. h., mit wenigen Baugrößen für alle gängigen Seildurchmesser auszukommen.

Als Material für die Herstellung der Rollen kommt Leichtmetall oder relativ weicher Kunststoff wie Polyamid oder Phenolharz in Betracht. Dies hat den Vorteil, daß die Herstellung der Rollen verbilligt wird, daß Beschädigungen des Seils weitgehend vermieden werden und daß eine Gewichtsersparnis eintritt.

Die Achsen der Rollen werden in den zugehörigen Achslagern zweckmäßig vernietet, verschraubt oder in ähnlicher Weise leicht lösbar angebracht, so daß die Rollen später ohne weiteres herausgenommen und ausgewechselt werden können.

Anwendungsgebiete derartiger Seilzug-Klemmvorrichtungen sind der Segelsport, bei dem der Erfindungsgegenstand als sogenannte »Schotklemme« Verwendung findet, der Kraftfahrzeugbau, bei dem der Erfindungsgegenstand als Verschluß für Abschleppseile oder Sicherheitsgurte Verwendung findet, das Transportwesen, bei dem der Erfindungsgegenstand als Verschluß für Lasthebemittel Verwendung findet, oder der Bergsport, bei dem der Erfindungsgegenstand als Verschluß für Skibindungen oder für Traggurte von Rücksäcken Verwendung findet. Überall da, wo sich das Problem stellt, ein Seil bzw. eine Schnur sicher festzulegen, aber auch leicht wieder lösen zu können, und wo bisher andere Vorrichtungen wie beispielsweise Karabinerhaken Verwendung fanden, läßt sich der Erfindungsgegenstand vorteilhaft verwenden.

Bei einer Verwendung als Verschluß für Abschleppseile kann der Erfindungsgegenstand den üblichen Abschlepphaken ersetzen. Während das Anschweißen der üblichen Abschlepphaken recht aufwendig ist, können Seilzug-Klemmvorrichtungen der erfindungsgemäßen Art auf einfache Weise an der Unterseite des Fahrzeugs verschraubt werden. Sie sind dabei sicherer und einfacher zu bedienen als Abschlepphaken, bei denen insbesondere der Anfänger häufig Probleme hat, wie ein Abrutschen des Seils bzw. ein zu plötzliches Spannen. Hier wirkt sich die Möglichkeit des Nachstellens der Seillänge durch Lösen und Wiederfestlegen besonders vorteilhaft aus. Auch als Verschluß für Sicherheitsgurte ist der Erfindungsgegenstand mit Vorteil einsetzbar. Hierbei ist es lediglich notwendig, die bisherigen Sicherheitsgurte so zu ändern, daß die an ihrem Ende befindliche, in einen Schnappmechanismus einrastende Metallzunge durch einen schnurähnlichen Fortsatz ersetzt wird. An die Stelle des üblichen, auf Druck zu öffnenden Schnappmechanismus tritt dann der Erfindungsgegenstand. Dies hat den Vorteil, daß der Gurt sehr leicht nachgestellt werden kann. Er ist einfach zu lösen, indem man den schnurähnlichen Fortsatz ergreift und nach oben, d. h. vom Körper weg, zieht.

Auch auf dem Gebiet des Transportes von mit Seilen verschnürten bzw. an Seile gebundenen Lasten bietet der Erfindungsgegenstand Vorteile. Hier wird häufig einfach eine Schlinge um das zu bewegende Gut gebunden, welche dann durch einen Endknoten festgezurrt wird. Über die erfindungsgemäße Seilzug-Klemmvorrichtung ist es jedoch möglich, das Seil nach jeder Seite fest anzuziehen, wenn man zwischen das in der Schlinge befindliche Transportgut und den Haken der Transportvorrichtung eine Seilzugklemme der beschriebenen Art zwischenschaltet.

Bei Skibindungen kommt es darauf an, die Schnüre so festzulegen, daß sie im Ernstfall jederzeit leicht gelöst werden können. In Verbindung mit einem auf verstärkte Belastung automatisch reagierenden Lösemechanismus, der die Schnur nach schräg oben zieht, ergibt sich eine rasch und einfach funktionierende Sicherheitsbindung. Ferner ist eine Anbringung an den unteren Enden der Innenseite von Wander-Rucksäcken vorteilhaft, da sich auf diese Weise die Möglichkeit bietet, die Traggurte in einfacher Weise an die Größe des Trägers anzupassen und sie auch beim Absetzen des Rucksackes in einfacher Weise durch Ziehen nach oben zu lösen.

Ausführungsbeispiele des Erfindungsgegenstandes und deren Wirkungsweise werden nachfolgend anhand der Figuren 1 bis 5 näher beschrieben. Es zeigt

Figur 1 eine teilweise geschnittene Draufsicht auf eine als Schotklemme ausgebildete Seilzug-Klemmvorrichtung in entspanntem Zustand, d. h. ohne Seil (Schot),

Figur 2 eine Draufsicht analog Figur 1 in gespanntem Zustand, d. h. mit eingelegtem Seil (Schot),

Figur 3 eine perspektivische Ansicht des Gegenstandes nach Figur 1 in Richtung auf den sich verengenden V-förmigen Klemmspalt,

Figur 4 eine Seitenansicht einer Seilzug-Klemmvorrichtung in Richtung des sich verengenden Klemmspaltes mit zwei übereinander angeordneten Rollenpaaren und

Figur 5 einen Vertikalschnitt in der Symmetrieebene einer Variante des Ausführungsbeispiels gemäß Figur 1 mit einer höhenverstellbaren Auflagefläche für das Seil (Schot), gleichfalls zur Verwendung als Schotklemme.

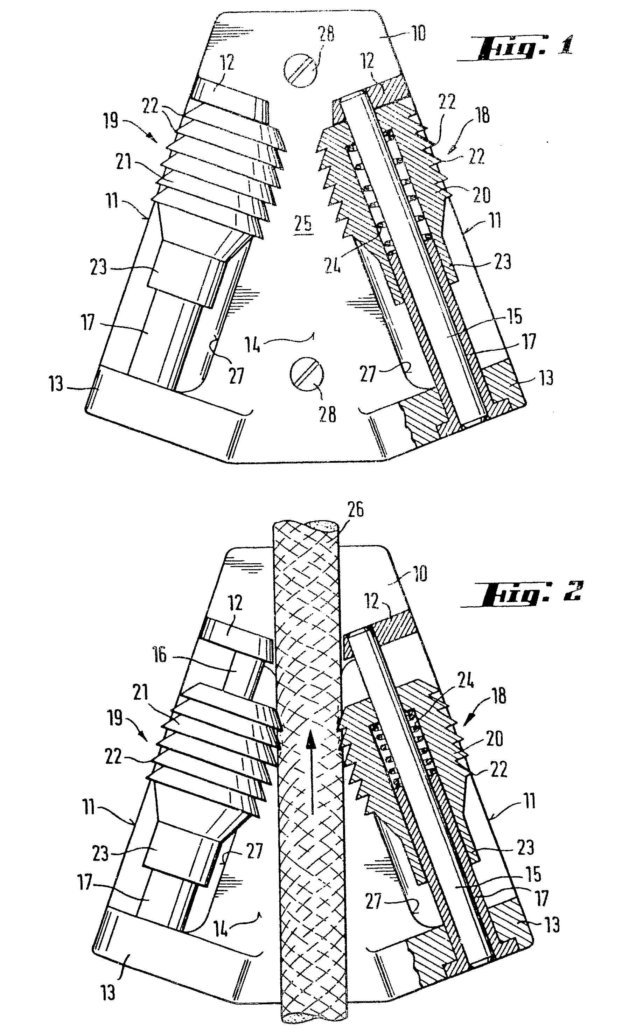

Figur 1 zeigt eine Tragplatte 10 von etwa trapezförmigem Grundriß, die in der Nähe ihrer unter einem Winkel von etwa 30 Grad stehenden Seitenkanten 11 mit Achslagern 12 und 13 versehen ist und eine Bezugsfläche 14 aufweist, welche durch die Oberfläche der Tragplatte 10 gebildet wird. In den Achslagern 12 und 13 sind Achsen 15 und 16 in Form von Zylinderstiften befestigt, die gleichfalls unter einem Winkel von etwa 30 Grad zueinander stehen und parallel zur Bezugsfläche 14 verlaufen. Ausgehend von den Achslagern 13 sind die Achsen 15 und 16 von Hülsen 17 umgeben.

Auf den Achsen 15 und 16 sind Klemmkörper 18 und 19 angeordnet, die als Rollen 20 und 21 ausgebildet und auf den Achsen 15 und 16 frei drehbar gelagert sind. Die Hüllfläche der Rollen hat in etwa Birnenform, so daß die Rollen aus einem dickeren Teil mit Zähnen 22 und aus einem dünneren Teil in Form eines Halses 23 bestehen. Die Gesamtlänge der Rollen 20 und 21 ist merklich kürzer als der Abstand der einander zugekehrten Flächen der Achslager 12 und 13, so daß die Rollen 20 und 21 auf den Achsen 15 und 16 bzw. auf den Hülsen 17 längsverschiebbar sind. Die Rollen weisen eine axiale Bohrung auf, deren Durchmesser demjenigen der Hülse 17 entspricht, also größer ist als der Durchmesser der Achsen 15 und 16. Auf diese Weise wird zwischen dem Ende der Hülse 17 und dem Ende der Bohrung in der Rolle ein hohlzylindrischer Raum gebildet, in dem eine Rückstellfeder 24 angeordnet ist, die als Druckfeder mit sehr flacher Federcharakteristik ausgebildet ist. Unter der Wirkung der Rückstellfeder werden die Rollen 20 und 21 im Entlastungszustand gegen die Achslager 12 geschoben, d. h., sie haben dabei den kleinstmöglichen Abstand voneinander. Zwischen den Rollen 20 und 21 wird der sogenannte Klemmspalt 25 gebildet, der zur Aufnahme eines Seils dient. Durch Verschiebung der Rollen 20 und 21 in Richtung auf die Achslager 13 vergrößert sich naturgemäß aufgrund der Winkelstellung der Achsen 15 und 16 der Abstand der Rollen voneinander.

Die jeweils aus einem Stück bestehenden Rollen 20 und 21 weisen dabei in ihrem dickeren Teil eine Oberfläche auf, die man sich aus Kegelstümpfen zusammengesetzt denken kann, deren senkrecht zur Rollenachse stehende Flanken in Richtung auf die Achslager 13 weisen.

Figur 2 ist zu entnehmen, welche Stellung die Rollen 20 und 21 auf den Achsen 15 und 16 einnehmen, wenn sich im Klemmspalt 25 ein Seil 26 befindet. Beim Hineindrücken des Seils aus der Richtung des Betrachters nach unten, bewegt sich das Seil 26 zunächst auf der rotationssymmetrischen Oberfläche der Rollen 20 und 21 und bewirkt hierbei eine Verschiebung der Rollen längs der Achsen und gegen den Widerstand der Rückstellfedern 24 in Richtung auf die Achslager 13, wodurch der Abstand zwischen den Rollen bzw. der Klemmspalt 25 vergrößert wird. Wird nunmehr ein Zug in Richtung des Pfeils auf das Seil 26 ausgeübt, so haben die Rollen 20 und 21 die Tendenz, dem Seil zu folgen und verschieben sich hierbei auf den Achsen 15 und 16 unter gleichzeitiger Anpressung der Rollen an das Seil 26. Jede Vergrößerung der Zugkraft am Seil hat automatisch ein stärkeres Zusammenpressen der Rollen zur Folge, so daß proportional auch die Klemmkraft erhöht wird. Durch einen entsprechenden Zug auf das Seil entgegen der Richtung des Pfeils wird der Vorgang umgekehrt, d. h., die Rollen verschieben sich in Richtung auf das breitere Ende des Klemmspaltes 25, und das Seil 26 kann unter gleichzeitiger Drehung der Rollen leicht aus dem Klemmspalt entnommen werden.

Figur 3 ist im wesentlichen das räumliche Aussehen der Seilzug-Klemmvorrichtung nach den Figuren 1 und 2 zu entnehmen. Es ist zu erkennen, daß die Tragplatte 10 mit den Achslagern 12 und 13 einstückig ausgebildet ist und beispielsweise aus einem hochschlagzähen Kunststoff oder aus einer Leichtmetall-Druckgußlegierung bestehen kann. Die Achslager 12 und 13 ragen nach oben um ein entsprechendes Maß über die Bezugsfläche 14 hinaus. Beiderseits der Bezugsfläche 14 ist die Tragplatte 10 mit Ausnehmungen 27 versehen, in welche ein Teil des Umfangs der Rollen 20 und 21 hineinragt. In der Tragplatte 10 befinden sich außerdem noch zwei Bohrungen für Schrauben 28, mit denen die Klemmvorrichtung beispielsweise auf einem nicht dargestellten Bootsrand befestigbar ist.

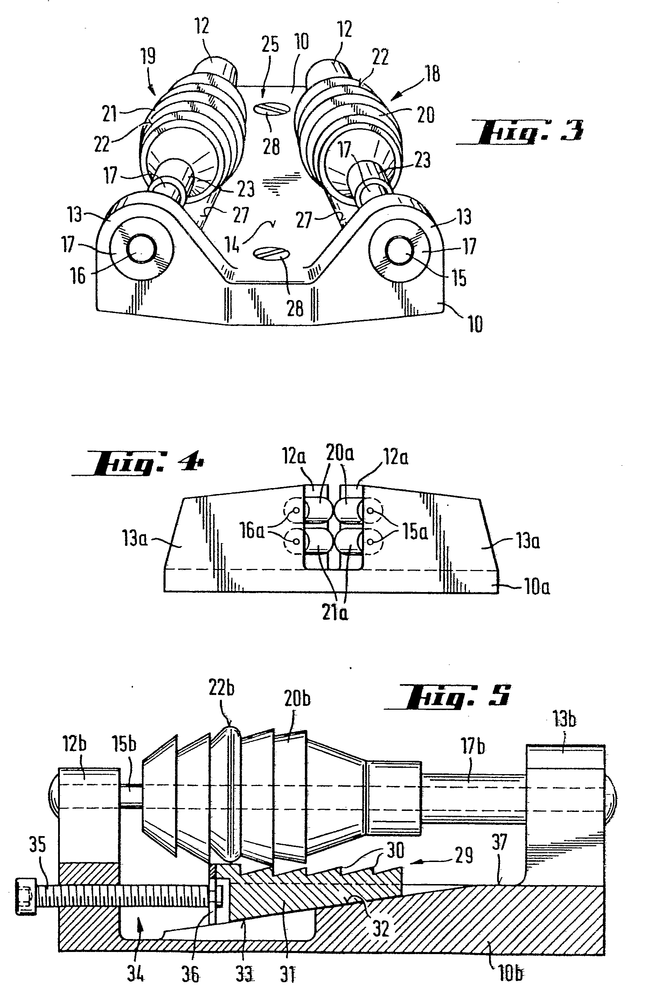

In Figur 4 ist die Tragplatte 10a mit Achslagern 12a und 13a versehen, in denen übereinander zwei Paare von Rollen 20a bzw. 21a angeordnet sind. Die Achsen 15a und 16a dieser Rollen liegen in Ebenen, die parallel zur Tragplatte 10a verlaufen. Die jeweils auf einer Seite (des Klemmspaltes) angeordneten Rollen liegen in einer zur Tragplatte 10a senkrechten Ebene, wobei die beiden senkrechten Ebenen V-förmig zueinander ausgerichtet sind, wie dies der Anordnung in den Figuren 1 bis 3 entspricht.

Figur 5 zeigt eine Tragplatte 10b mit Achslagern 12b und 13b, zwischen denen auf jeder Seite eine Achse 15b mit einer Hülse 17b angeordnet ist. Auf der Achse 15b befindet sich in einer Anordnung analog den Figuren 1 bis 3 eine Rolle 20b. Für die andere, vor der Schnittebene liegende Seite der Klemmvorrichtung gilt das gleiche. Zwischen den gegenüberliegenden Rollen und unterhalb der Achsen dieser Rollen, d. h. in der senkrechten Symmetrieebene, welche mit der Schnittebene in Figur 5 übereinstimmt, ist eine verstellbare Bezugsfläche 29 für die Auflage des nicht dargestellten Seils angeordnet, die mit einem Oberflächenprofil 30 versehen ist, welches analog zur Oberfläche der Rollen Zähne aufweist. Die Bezugsfläche 29 ist Teil eines Schiebekörpers 31, der über eine schiefe Ebene 32 mit einer entsprechenden schiefen Ebene 33 der Tragplatte 10b in Berührung steht. Die Verschiebung des Schiebekörpers 31 erfolgt mittels einer Verstelleinrichtung 34, die aus einer in der Tragplatte 10b gelagerten Gewindespindel 35 besteht, welche in den Schiebekörper 31 formschlüssig eingreift. Die Auf- und Abwärtsbewegung des Schiebekörpers 31 gegenüber der Gewindespindel 35 ist in Folge einer Schlitzverbindung 36 nicht behindert. Durch Verschieben des Schiebekörpers 31 in Richtung der Gewindespindel 35 läßt sich der Abstand der Bezugsfläche 29 gegenüber einer oberen Begrenzungsfläche 37 der Tragplatte 10b stufenlos verändern, wodurch die Klemmvorrichtung im Hinblick auf das Klemmverhalten und/oder unterschiedliche Durchmesser des Seils einstellbar ist.

Aus Figur 5 ist noch zu entnehmen, daß in der Rolle 20b ein Zahn 22b angeordnet ist, der auf seinem Umfang gut abgerundet ist und geringfügig über die Kanten der übrigen Zähne vorsteht. Wie bereits weiter oben angegeben wurde, hat der abgerundete Zahn den Vorteil, ein Gleiten des Seils in Öffnungsrichtung der Klemme zu begünstigen, ohne die Klemmwirkung in Schließrichtung merklich zu beeinträchtigen.

## Patentansprüche

1. Seilzug-Klemmvorrichtung mit zwei gegenüberliegenden, mit Zähnen (22) versehenen, oberhalb einer als Auflage für das Seil (26) dienenden Bezugsfläche (14) angeordneten Klemmkörpern (18, 19), deren Abstand voneinander zur Aufnahme und Entnahme des Seils (26) veränderbar und durch eine auf das Seil einwirkende Zugkraft unter Anpressung der Klemmkörper (18, 19) an das Seil (26) verringerbar ist, dadurch gekennzeichnet, daß die Klemmkörper (18, 19) als Rollen (20, 20a, 20b; 21, 21a) ausgebildet und auf je einer Achse (15, 15a, 15b; 16, 16a) frei drehbar gelagert sind.

2. Seilzug-Klemmvorrichtung nach Anspruch 1, dadurch gekennzeichnet, daß die Achsen (15, 15a, 15b; 16, 16a) einen spitzen Winkel zwischen sich einschließen und daß die Rollen (20, 20a, 20b; 21, 21a) unter Veränderung ihres Abstandes voneinander auf den Achsen längsverschiebbar angeordnet sind.

3. Seilzug-Klemmvorrichtung nach den Ansprüchen 1 und 2, dadurch gekennzeichnet, daß die Achsen (15, 15a, 15b; 16, 16a) beidseitig in Achslagern (12, 12a, 12b; 13, 13a) gehalten sind, die auf einer Tragplatte (10, 10a, 10b) fest angeordnet sind.

4. Seilzug-Klemmvorrichtung nach Anspruch 2, dadurch gekennzeichnet, daß die Achsen (15, 15a, 15b; 16, 16a) einen Winkel von etwa 25 bis 35 Grad, vorzugsweise etwa 30 Grad, miteinander bilden.

5. Seilzug-Klemmvorrichtung nach Anspruch 3, dadurch gekennzeichnet, daß sich die Rollen (20, 20a, 20b; 21, 21a) an ihrer nächstkommenden Stelle berühren.

6. Seilzug-Klemmvorrichtung nach Anspruch 2, dadurch gekennzeichnet, daß zwischen Achse und Rolle eine Rückstellfeder (24) liegt, welche die Achse umgibt und die Rollen in Richtung auf eine Annäherung belastet.

7. Seilzug-Klemmvorrichtung nach Anspruch 1, dadurch gekennzeichnet, daß mehrere Rollenpaare (20a, 21a) etagenartig übereinander angebracht sind, deren Achsen (15a, 16a) von unten nach oben in gleichem Abstand und parallel zueinander angeordnet sind.

8. Seilzug-Klemmvorrichtung nach einem der Ansprüche 1 bis 7, dadurch gekennzeichnet, daß die Rollen birnenförmig gestaltet sind, wobei nur die verdickten, einen Klemmspalt (25) für das Seil bildenden Teile der Rollen eine Zahnung aufweisen.

9. Seilzug-Klemmvorrichtung nach Anspruch 1, dadurch gekennzeichnet, daß die Oberfläche der Rollen (20, 21) aus Kegelstümpfen zusammengesetzt ist, die sich zu einem Sägezahnprofil ergänzen, wobei die im wesentlichen senkrecht zur Rollenachse stehenden Flanken des Sägezahnprofils der Zugrichtung auf das Seil (26) abgewandt sind.

10. Seilzug-Klemmvorrichtung nach Anspruch 1, dadurch gekennzeichnet, daß die Oberfläche der Rollen nach Art eines Sägezahngewindes ausgeführt ist, wobei die im wesentlichen senkrecht zur Rollenachse stehenden Flanken des Sägezahnprofils der Zugrichtung auf das Seil (26) abgewandt sind.

11. Seilzug-Klemmvorrichtung nach den Ansprüchen 1 und 9 oder 10, dadurch gekennzeichnet, daß mindestens einer der Zähne (22b) gut abgerundet ist und geringfügig über die Kanten der übrigen Zähne vorsteht.

12. Seilzug-Klemmvorrichtung nach den Ansprüchen 1 und 3, dadurch gekennzeichnet, daß die Tragplatte (10b) zwischen gegenüberliegenden Rollen mit einer verstellbaren Bezugsfläche (29) für das Seil (26) versehen ist.

13. Seilzug-Klemmvorrichtung nach Anspruch 12, dadurch gekennzeichnet, daß die Bezugsfläche (29) Teil eines Schiebekörpers (31) ist, der über eine schiefe Ebene (32) mit einer entsprechenden schiefen Ebene (33) der Tragplatte (10b) sowie mit einer in Gefällerichtung der schiefen Ebenen wirkenden Verstelleinrichtung (34) in Verbindung steht.

14. Seilzug-Klemmvorrichtung nach Anspruch 12, dadurch gekennzeichnet, daß die Bezugsfläche (29) mit einem das Seil haltenden Oberflächenprofil versehen ist.

15. Seilzug-Klemmvorrichtung nach einem oder mehreren der Ansprüche 1 bis 14, gekennzeichnet durch ihre Ausbildung als Schotklemme für Wasser-Segelfahrzeuge.

16. Seilzug-Klemmvorrichtung nach einem oder mehreren der Ansprüche 1 bis 14, gekennzeichnet durch ihre Ausbildung als Verschluß für Abschleppseile an Kraftfahrzeugen.

17. Seilzug-Klemmvorrichtung nach einem oder mehreren der Ansprüche 1 bis 14, gekennzeichnet durch ihre Ausbildung als Verschluß für Sicherheitsgurte.

18. Seilzug-Klemmvorrichtung nach einem oder mehreren der Ansprüche 1 bis 14, gekennzeichnet durch ihre Ausbildung als Verschluß bei Lasthebemitteln.

19. Seilzug-Klemmvorrichtung nach einem oder mehreren der Ansprüche 1 bis 14, gekennzeichnet durch ihre Ausbildung als Verschluß bei Skibindungen.

20. Seilzug-Klemmvorrichtung nach einem oder mehreren der Ansprüche 1 bis 14, gekennzeichnet durch ihre Ausbildung als Verschluß für Traggurte von Rucksäcken.

## Claims

1. A rope-clamping device comprising two opposing clamping elements (18, 19) equipped with teeth (22) and arranged above a reference surface (14) serving as a support for the rope (26), the distance between the said clamping elements being variable to allow the rope (26) to be inserted and removed, and the said distance being reducible by a tensile force applied to the said rope and pressing the said clamping elements thereagainst, characterised in that the clamping elements (18, 19) are in the form of rollers (20, 20a, 20b; 21, 21a), each element being mounted for free rotation upon a shaft (15, 15a, 15b; 16, 16a).

2. A rope-clamping device according to claim 1, characterised in that the shafts (15, 15a, 15b; 16, 16a) enclose an acute angle and in that the rollers (20, 20a, 20b; 21, 21a) are displaceable longitudinally along the said axes, which alters the distances between them.

3. A rope-clamping device according to claims 1 and 2, characterised in that the shafts (15, 15a, 15b; 16, 16a) are held at each end in bearings (12, 12a, 12b; 13, 13a) secured to a support plate (10, 10a, 10b).

4. A rope-clamping device according to claim 2, characterised in that the shafts (15, 15a , 15b; 16, 16a) enclose an angle of between about 25° and 30°, preferably about 30°.

5. A rope-clamping device according to claim 3, characterised in that the rollers (20, 20a, 20b; 21, 21a) touch at the point where they are closest together.

6. A rope-clamping device according to claim 2, characterised in that a return spring (24) is arranged between each shaft and roller, the said springs surrounding the said shafts and urging the rollers in the direction in which they move closer together.

7. A rope-clamping device according to claim 1, characterised in that several pairs of rollers (20a, 21a) are arranged one above the other, the shafts (15a, 16a) thereof being arranged from bottom to top at equal distances from, and parallel with, each other.

8. A rope-clamping device according to one of claims 1 to 7, characterised in that the rollers are of pear-shaped configuration, only the thickened parts thereof, forming a clamping gap (25) for the rope, being equipped with teeth.

9. A rope-clamping device according to claim 1, characterised in that the surface of the rollers (20, 21) is made up of truncated cones producing a saw-tooth profile, the substantially flat end-faces of the said saw-tooth profile being directed away from the direction in which the tension is applied to the rope (26).

10. A rope-clamping device according to claim 1, characterised in that the surface of the rollers is in the form of a saw-tooth thread, the substantially flat end-faces of the saw-tooth profile being directed away from the direction in which the tension is applied to the rope (26).

11. A rope-clamping device according to claims 1 and 9 or 10, characterised in that at least one of the teeth (22b) is well-rounded and projects slightly beyond the edges of the remaining teeth.

12. A rope-clamping device according to claims 1 and 3, characterised in that the support-plate (10b) is provided, between opposing rollers, with an adjustable reference surface (29) for the rope (26).

13. A rope-clamping device according to claim 12, characterised in that the reference surface (29) is a part of a sliding element (31) which is in contact, through a sloping plane (32), with a corresponding sloping plane (33) on the support-plate (10b), and comprises an adjusting device (34) to move it along the direction of the said sloping plane.

14. A rope-clamping device according to claim 12, characterised in that the reference surface (29) is provided with a surface profile which gets a purchase on the rope.

15. A rope-clamping device according to one or more of claims 1 to 14, characterised by being designed as a sheet clamp for sail boats.

16. A rope-clamping device according to one or more of claims 1 to 14, characterised by being designed as a fastening for tow-ropes for automotive vehicles.

17. A rope-clamping device according to one or more of claims 1 to 14, characterised by being designed as a fastening for safety belts.

18. A rope-clamping device according to one or more of claims 1 to 14, characterised by being designed as a fastening for hoists.

19. A rope-clamping device according to one or more of claims 1 to 14, characterised by being designed as a fastening for ski-bindings.

20. A rope-clamping device according to one or more of claims 1 to 14, characterised by being designed as a fastening for back-pack straps.

**Revendications**

1. Dispositif de serrage de câble, corde ou lien analogue, comportant deux pièces de serrage (18, 19) opposées pourvues de dents (22) et disposées au-dessus d'une surface de référence (14) servant d'appui pour le câble (26), dont l'écartement peut être changé pour la réception et l'enlévement du câble (26) ou d'un lien analogue et peut être réduit, avec pressage des pièces de serrage (18, 19) contre le câble (26), par une traction sur le câble (26), caractérisé en ce que les pièces de serrage (18, 19) sont des rouleaux (20, 20a, 20b; 21, 21a) montés chacun en rotation libre sur un axe (15, 15a, 15b; 16, 16a).

2. Dispositif de serrage selon la revendication 1, caractérisé en ce que les axes (15, 15a, 15b; 16, 16a) renferment un angle aigu entre eux et en ce que les rouleaux (20, 20a, 20b; 21, 21a) peuvent coulisser longitudinalement sur les axes avec changement de l'écartement des rouleaux.

3. Dispositif de serrage selon les revendications 1 et 2, caractérisé en ce que les axes (15, 15a, 15b; 16, 16a) sont maintenus des deux côtés dans des paliers d'axe (12, 12a, 12b; 13, 13a) qui sont disposés fixes sur une plaque de support (10, 10a, 10b).

4. Dispositif de serrage selon la revendication 2, caractérisé en ce que les axes (15, 15a, 15b; 16, 16a) renferment entre eux un angle d'environ 25 à 35°, de préférence d'environ 30°.

5. Dispositif de serrage selon la revendication 3, caractérisé en ce que les rouleaux (20, 20a, 20b; 21, 21a) se touchent à l'endroit ou ils sont le plus près l'un de l'autre.

6. Dispositif de serrage selon la revendication 2, caractérisé en ce qu'un ressort de rappel (24) est placé entre l'axe et le rouleau, ce ressort entourant l'axe et chargeant les rouleaux dans le sens de leur approche mutuelle.

7. Dispositif de serrage selon la revendication 1, caractérisé en ce que plusieurs paires de

rouleaux (20a, 21a) sont superposées en étages, les axes (15a, 16a) de ces rouleaux ayant le même écartement de bas en haut et étant disposées parallèlement.

8. Dispositif de serrage selon l'une des revendications 1 à 7, caractérisé en ce que les rouleaux sont en forme de poire et seules leurs parties épaisses, formant une fente de serrage (25) pour le câble, présentent une denture.

9. Dispositif de serrage selon la revendication 1, caractérisé en ce que la surface des rouleaux (20, 21) est composée de cônes tronqués qui forment ensemble un profil en dents de scie, les flancs de dent correspondant aux bases des cônes et sensiblement perpendiculaires à l'axe du rouleau étant tournés vers le côté opposé au sens de la traction sur le câble (26).

10. Dispositif de serrage selon la revendication 1, caractérisé en ce que la surface des rouleaux est formée par un filet en dent de scie, dont le flanc sensiblement perpendiculaire à l'axe du rouleau est tourné vers le côté opposé au sens de la traction sur le câble (26).

11. Dispositif de serrage selon les revendications 1 et 9 ou 10, caractérisé en ce qu'au moins l'une des dents (22b) est bien arrondie et fait légèrement saillie des bords des autres dents.

12. Dispositif de serrage selon les revendications 1 et 3, caractérisé en ce que la plaque de support (10b) est pourvue d'une surface de référence ajustable (29) pour le câble (26) entre des rouleaux opposés.

13. Dispositif de serrage selon la revendication 12, caractérisé en ce que la surface de référence (29) fait partie d'une pièce coulissante (31) qui est en liaison par un plan incliné (32) avec un plan incliné correspondant (33) de la plaque de support (10b), ainsi qu'avec un dispositif d'ajustement (34) agissant dans le sens de la pente des plans inclinés.

14. Dispositif de serrage selon la revendication 12, caractérisé en ce que la surface de référence (29) présente un profil superficiel pour le maintien du câble.

15. Dispositif de serrage selon une ou plusieurs des revendications 1 à 14, caractérisé en ce qu'il est réalisé sous forme d'un taquet coinceur d'écoute pour embarcations à voile sur l'eau.

16. Dispositif de serrage selon une ou plusieurs des revendications 1 à 14, caractérisé en ce qu'il est réalisé sous forme d'une fermeture pour câbles de remorquage de véhicules automobiles.

17. Dispositif de serrage selon une ou plusieurs des revendications 1 à 14, caractérisé en ce qu'il est réalisé sous forme d'une fermeture pour ceintures de sécurité.

18. Dispositif de serrage selon une ou plusieurs des revendications 1 à 14, caractérisé en ce qu'il est réalisé sous forme d'une fermeture pour moyens de levage de charges.

19. Dispositif de serrage selon une ou plusieurs des revendications 1 à 14, caractérisé en ce qu'il est réalisé sous forme d'une fermeture pour fixations de skis.

20. Dispositif de serrage selon une ou plusieurs des revendications 1 à 14, caractérisé en ce qu'il est réalisé sous forme d'une fermeture pour sangles de support de sacs à dos.

Fig. 1

Fig. 2

*Fig. 3*

*Fig. 4*

*Fig. 5*